# EUROPÄISCHE PATENTSCHRIFT

(11) **EP 1 630 010 B1**
(45) Veröffentlichungstag und Bekanntmachung des Hinweises auf die Patenterteilung: **10.10.2007**
(21) Anmeldenummer: 05018150.2
(22) Anmeldetag: 22.08.2005
(51) Int. Cl.: B60C 25/132

(54) **Vorrichtung und Verfahren zum Montieren eines Reifens**
Device and method for mounting a tyre
Dispositif et procédé pour le montage d'un pneumatique

(30) Priorität: 23.08.2004 DE 102004040866
(43) Veröffentlichungstag der Anmeldung: 01.03.2006
(73) Patentinhaber: Schenck RoTec GmbH, 64293 Darmstadt (DE)
(72) Erfinder: Peinelt, Andreas, 64319 Pfungstadt (DE); Lehr, Werner, 64397 Modautal (DE)
(74) Vertreter: Behrens, Helmut

(56) Entgegenhaltungen:
- DE-A1- 2 829 936
- US-A- 4 800 944
- US-A- 6 125 904

## Beschreibung

Die Erfindung betrifft das Montieren eines Reifens auf eine Felge eines Fahrzeugrades mit einer Einrichtung zum Halten der Felge und einem Aufziehkopf mit Wulstabweiser und Eindrückrolle sowie einem Antrieb zum Drehen des Aufziehkopfes um die Felgenachse und zur axialen Verschiebung des Aufziehkopfes.

Eine derartige Vorrichtung ist aus dem Firmenkatalog "Auswucht- und Diagnosetechnik", Katalog 2002, RA 1020 der Firma Schenck RoTec GmbH, Landwehrstr. 55, 64293 Darmstadt bekannt. Auf den Seiten 114 und 115 ist eine Montagevorrichtung für Fahrzeugräder gezeigt und beschrieben, bei der der Reifen schräg auf die Felge eines Fahrzeugrades aufgelegt wird. Der untere Reifenwulst befindet sich zum Teil innerhalb des Tiefbetts der Felge, zum Teil ragt er über das obere Felgenhorn hinaus. Bei der Montage wird die Felge festgehalten und der abgesenkte Aufziehkopf mit Wulstabweiser und Eindrückrolle dreht sich um die Felgenachse. Der Wulstabweiser sorgt dafür, dass der Reifenwulst in radialer Richtung außerhalb des Felgenhorns liegt und der Reifenwulst von der nachfolgenden Eindrückrolle in axialer Richtung in das Felgentiefbett bzw. der untere Reifenwulst zur Anlage an das untere Felgenhorn gedrückt wird. Die Montage der beiden Reifenwülste erfolgt wahlweise gemeinsam oder nacheinander in zwei Umdrehungen des Aufziehkopfes. Der Aufziehkopf stellt sich auf unterschiedliche Felgentypen, d.h. unterschiedliche Felgendurchmesser, Felgenbreiten oder Felgenformen ein, was vollautomatisch anhand einer vorgeschalteten Typerkennung erfolgt.

Aus der US-A-4.800.944 ist ebenfalls eine Einrichtung zum Aufziehen von Fahrzeugreifen bekannt. Diese Aufziehvorrichtung besitzt einen absenkbaren ansonsten tangential und radial stationären Aufziehkopf, der oberhalb einer Zuführvorrichtung angeordnet ist. Dabei wird auf der Zuführvorrichtung zunächst die Felge unter den Aufziehkopf positioniert, festgeklemmt und anschließend darauf der Fahrzeugreifen angeliefert. An der Unterseite des Aufziehkopfes ist ein horizontal drehbarer Montagearm vorgesehen, dessen Drehachse mit der darunter befindlichen Felgenachse fluchtet. Der Montagearm enthält an seinem Endbereich einen Montageblock, an dem die Aufziehwerkzeuge gemeinsam befestigt sind. Diese bestehen aus einem Wulstabweiser, der als horizontale Rollenanordnung ausgebildet ist und aus einer vertikal am Montageblock befestigten Andruckrolle. Dabei besteht der Wulstabweiser im wesentlichen aus einer horizontalen Wulstrolle, die beim Drehvorgang des Montagearms mit der Reifenwulst in Eingriff gebracht wird und einer am Felgenrand geführten Felgenrolle. Durch die Felgenrolle wird dabei die Wulstrolle in einem vorgegebenen Abstand außerhalb des Felgenhorns geführt.

Zur Montage des Reifens auf der Felge wird der Aufziehkopf zunächst vertikal nach unten in Richtung auf die Felge abgesenkt. Dabei ist an der Unterseite des radial und tangential starren Aufziehkopfes noch ein Tastelement vorgesehen, das in einem Stoßdämpfer angeordnet ist und beim Auftreffen auf den Felgenrand den Absenkvorgang beendet. Danach wird der Montagearm betätigt, wodurch die Felgenrolle mit dem Feigenrand und die Wulstrolle mit dem Reifenwulst in Eingriff gebracht wird.

Dadurch kann die nachfolgende Andruckrolle den im Eingriff mit der Wulstrolle nach außen geführten Reifenwulst über das Felgenhorn in das Felgenbett eindrücken. Durch höchstens zwei Umdrehungen des Montagearms wird dadurch der Reifen auf die Felge aufgezogen. Durch die vorgegebene Länge des Montagearms und die radial und tangential starre Anordnung des Tastelements am Aufziehkopf können mit einer derartigen Aufziehvorrichtung ohne Umrüstarbeiten offensichtlich nur gleichartige Felgentypen mit annähernd gleichen Felgendurchmesser nacheinander aufgezogen werden.

Der Erfindung liegt die Aufgabe zugrunde, einen einwandfreien Ablauf des Aufziehvorgangs auch bei Zuführung unterschiedlicher Felgentypen sicherzustellen.

Diese Aufgabe wird erfindungsgemäß mit einer Vorrichtung mit den Merkmalen des Patentanspruchs 1 und einem Verfahren nach dem Patentanspruch 7 gelöst.

In vorteilhafter Weise wird mit der Erfindung erreicht, dass vor dem Beginn oder während des Aufziehvorgangs eine Fehlpositionierung zwischen Aufziehkopf und Felge festgestellt werden kann und als Folge der Aufziehvorgang nicht eingeleitet oder abgebrochen wird. Eine Fehlpositionierung kann z.B. durch Fehler bei der Typerkennung oder der nachfolgenden Übermittlung der bei der Typerkennung ermittelten Werte oder beim Einstellvorgang von Wulstabweiser oder Eindrückrolle entstehen, aber auch durch nicht planes oder nicht mittiges Aufspannen der Felge. Mit der Erfindung wird auf einfachste Weise erreicht, dass darauf zurückzuführende. Beschädigungen von Felgen oder Reifen mit Sicherheit nicht auftreten können. Insbesondere wenn der Wulstabweiser während des Aufziehvorgangs die Felge berührt, kann dies, da die Berührung auf der Dekorseite stattfindet, schon bei kleinsten sichtbaren Beschädigungen zu Ausschuss führen. Nach Behebung der Fehlorientierung durch z.B. Neuspannen der Felge oder Nachstellen der Position von Wulstabweiser oder Eindrückrolle, insbesondere deren axiale Positionen, kann der Aufziehvorgang begonnen oder fortgesetzt werden, ohne dass Ausschuß angefallen ist. Es sind hierfür keine aufwendigen zusätzlichen Einrichtungen erforderlich, da dem ohnehin vorhandenen Wulstabweiser entsprechende Eigenschaften zugeordnet sind.

Besonders vorteilhaft ist eine Weiterbildung, bei der die Signalübertragung vom Wulstabweiser zum Antrieb drahtlos erfolgt. Dadurch entfallen Kabelverbindungen, die im Produktionsprozeß besonders dann störend sind, wenn die Kabel Bewegungen, in diesem Fall axialen und kreisförmigen Bewegungen des Aufziehkopfes, schnell nachgeführt werden müssen. Die drahtlose Übertragung erfolgt bevorzugt als Funkübertragung; stattdessen kann jedoch beispielsweise auch eine optische Übertragung eingesetzt werden.

In einer konstruktiv einfachen Weiterbildung der Erfindung ist vorgesehen dass die dem Felgenhom zugeordnete Stirnfläche des Wulstabweisers ein Detektionselement aufweist.

Eine robuste Ausgestaltung sieht vor, dass das Detektionselement Teil einer Schalteinrichtung ist und einen Schaltstößel aufweist, der infolge eines Kontakts mit dem Felgenhorn um einen Schaltweg gegen eine Federkraft verschiebbar ist und dem ein z. B. als Piezoschalter ausgebildeter Schalter zugeordnet ist.

Dadurch, dass gemäß Anspruch 5 der Piezoeffekt zur Energieversorgung herangezogen wird, ist keine externe oder im Wulstabweiser z.B. als Batterie oder Akku vorzusehende Energiequelle erforderlich.

Eine schonende Behandlung des Reifens ist sichergestellt durch eine Weiterbildung, bei der die Stirnfläche einen ersten Flächenabschnitt aufweist, der rechtwinklig zur Achse des Wulstabweisers angeordnet ist und einen zweiten Flächenabschnitt, der zum ersten Flächenabschnitt geneigt und vorzugsweise unter einem Winkel von 45° ansteigend angeordnet ist. Dies gilt auch für die Ausgestaltung nach dem Patentanspruch 7. Das Felgenhorn kann so eine geneigte Fläche des Schaltschuhs berühren, was sowohl bei radialen als auch bei axialen Fehlpositionierungen zu einer Verschiebung des Schaltstößels in axialer Richtung und somit zur Betätigung der Schalteinrichtung führt.

Die Erfindung wird nachfolgend anhand von Ausführungsbeispielen erläutert, welche in der Zeichnung näher dargestellt sind.

Es zeigen:
- Fig. 1: die erfindungsgemäße Vorrichtung in perspektivischer Übersichtsdarstellung
- Fig. 2: den Wulstabweiser mit Signaleinrichtung in Seitenansicht
- Fig. 3: den Wulstabweiser in Vorderansicht
- Fig. 4: den Endbereich des Wulstabweisers nach Fig. 2 in größerem Maßstab

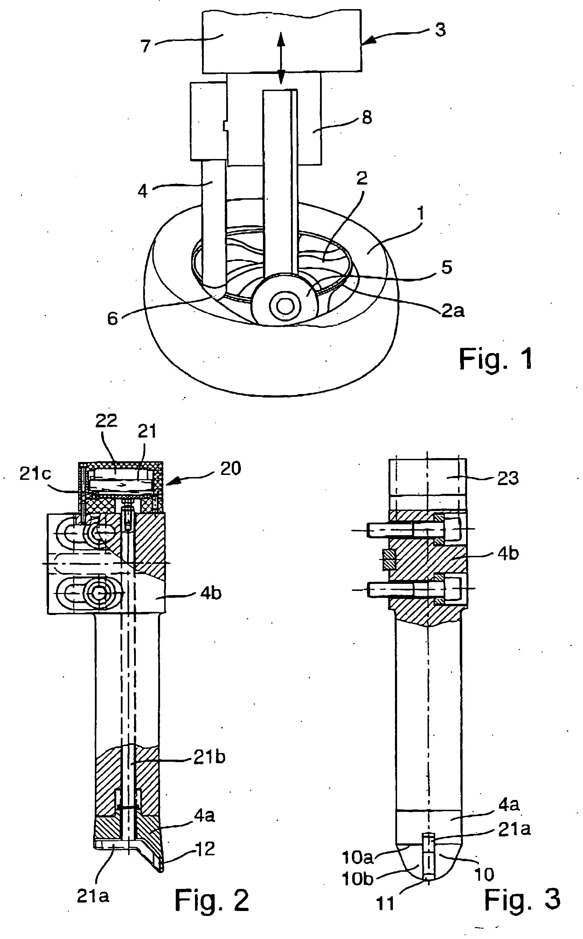

Die in Fig. 1 dargestellte Vorrichtung dient zum Montieren eines Reifens 1 auf einer Felge 2 eines Fahrzeugrades und ist in einem Maschinengestell angeordnet.

Die Felge 2 wird von einer nicht näher dargestellten Einrichtung fest in horizontaler Lage gehalten. Oberhalb der Felge 2 ist der Aufziehkopf 3 derart angeordnet, dass die Drehachse des Aufziehkopfes 3 mit der vertikal verlaufenden Felgenachse zusammenfällt.

Der Aufziehkopf 3 ist am nicht dargestellten Maschinengestell gelagert und von einem ebenfalls nicht dargestellten Antrieb um mindestens eine Umdrehung um seine Drehachse drehbar und in axialer Richtung stufenlos verstellbar.

Der Aufziehkopf 3 wird in Abhängigkeit von der axialen Lage der Felgenstirnflächen aufeinanderfolgender Felgen über einer Steuereinrichtung 7 vom Antrieb axial verstellt.
Der Steuereinrichtung 7 werden die Signale einer vorgeschalteten Typerkennungseinrichtung für unterschiedliche Felgen und ggf. unterschiedliche Reifen zugeführt. Der Steuereinrichtung 7 können jedoch auch manuell Informationen über die anstehenden Felgen- und Reifentypen eingegeben werden. Der Aufziehkopf 3 weist einen Wulstabweiser 4 und eine Eindrückrolle 5 auf. Der Aufziehkopf 3 kann auch mehrere Eindrückrollen aufweisen. Wulstabweiser 4 und Eindrückrolle 5 sind an einem Adapterteil 8 des Aufziehkopfes 3 derart befestigt, dass ihre Lagen in radialer Richtung zwecks Anpassung an unterschiedliche Felgen- und Reifendurchmesser einstellbar sind. Der Aufziehkopf 3 ist zur Ausführung der Drehbewegung mit einem Drehantrieb verbunden. Steuereinrichtung 7 und Drehantrieb können z.B. elektrisch oder über Druckmittel betätigt werden.

Die Eindrückrolle 5 ist über einen Tragarm am Adapterteil 8 lösbar befestigt. Die Drehachse der Eindrückrolle 5 verläuft im wesentlichen im rechten Winkel zur Felgenachse. Die Eindrückrolle 5 ist in Drehrichtung des Aufziehkopfes 3 hinter dem Wulstabweiser 4 angeordnet.

Der Wulstabweiser 4 ist im wesentlichen zylindrisch ausgebildet und weist einen Abschnitt 4a auf, der gegen den Reifenwulst anlegbar ist, einen Mittelabschnitt und einen Befestigungsabschnitt 4b. Der Abschnitt 4a weist eine Stirnfläche 10 auf, die aus einem ersten Flächenabschnitt 10a, der rechtwinklig zur Achse des Wulstabweisers 4 angeordnet ist und einem zweiten Flächenabschnitt 10b, der zum ersten Flächenabschnitt 10a geneigt und unter einem Winkel von etwa 45° ansteigend angeordnet ist, besteht. Quer und mittig über die Stirnfläche 10 verläuft geradlinig eine Nut 11, die sich vom Umfang des Abschnitts 4a im Bereich des Flächenabschnitts 10a bis kurz vor den Umfang des Abschnitts 4a im Bereich des Flächenabschnitts 10b erstreckt, diesen Umfangsabschnitt also nicht durchbricht. Diese Seite der Umfangsfläche 12 des Wulstabweisers 4 ist dem Reifenwulst 6 zuzuordnen, während die Flächenabschnitte 10a und 10b dem Felgenhorn 2a zuzuordnen sind.

Der Wulstabweiser 4 weist eine Signaleinrichtung 20 auf zur Abgabe eines die Bewegung des Aufziehkopfes 3 beeinflussenden Signals. Die Signaleinrichtung 20 umfaßt eine Schalteinrichtung 21, eine Energiequelle 22 und einen Transmitter 23. Mit dem Transmitter 23 wird drahtlos ein Signal zur Beeinflussung, insbesondere zur Abschaltung des Antriebs, d.h. des Drehantriebs und/oder der Steuereinrichtung 7, an diesen gegeben.

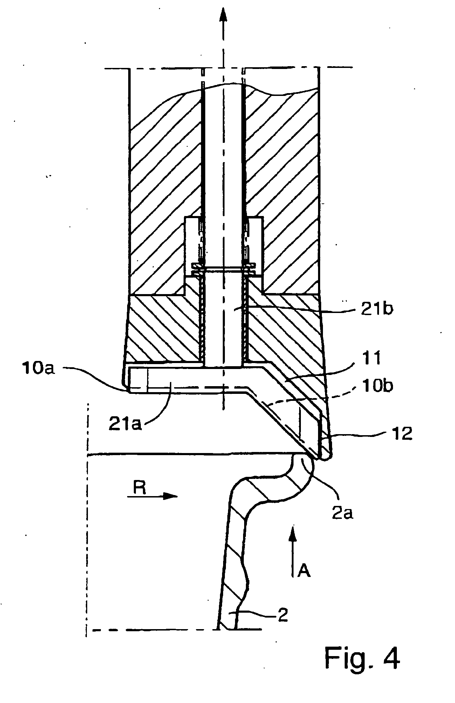

Die Schalteinrichtung 21 besteht aus einem Schaltschuh 21 a, einem Schaltstößel 21 b und einem Schalter 21c. Der Schaltschuh 21a besteht aus einem Material mit deutlich geringerer Härte ats das Material der Felge 2 und mit guten Gleiteigenschaften. Der Schaltschuh 21a bildet die Einrichtung zur Detektion eines Mindestabstands zwischen Felge 2 und Aufziehkopf 3. Der Schaltschuh 21 a ist so ausgestaltet, dass er gegen Federkraft in die in der Stirnfläche 10 des Wulstabweisers 4 eingebrachte Nut 11 eintauchen kann. Der Schaltschuh 21a ist in seiner Kontur der Stirnfläche 10 angepaßt, ist also ebenfalls abgewinkelt. Wird der Mindestabstand zwischen Felge 2 und Aufziehkopf 3 unterschritten, so berührt, wie aus Fig. 4 ersichtlich, das Felgenhorn 2a eine geneigte Fläche des Schaltschuhs 21a. Das hat-sowohl bei radialen Fehlpositionierungen, in der Fig. 4 durch den Pfeil R angedeutet, als-auch bei axialen Fehlpositionierungen, die durch den Pfeil A angedeutet sind, eine Eintauchbewegung des Schaltschuhs 21a in die Nut 11 und damit eine Verschiebung des Schaltstößels 21b gegen Federkraft nach oben zur Folge. Die Eintauchbewegung wird über den am Schaltschuh 21a befestigten Schaltstößel 21b, der in Achsrichtung durch den Wülstabweiser 4 verläuft, als Verschiebebewegung auf einen Schalter 21 c übertragen. Die Schaltbewegung des Schalters 21c wirkt auf ein Piezoelement, das dadurch als Energiequelle 22 wirkt und die Signalabgabe vom Transmitter 23 zum Antrieb initiiert. Schalter 21 c, Piezoelement und Transmitter 23 sind in einem Gehäuse an der anderen Stirnfläche.des Wulstabweisers 4 angeordnet. Die Signaleinrichtung 20 kann jedoch auch an jeder geeigneten anderen Stelle des Aufziehkopfes 3 angeordnet sein. Statt einer wegabhängigen Schalteinrichtung 21 kann eine kraftabhängige Signaleinrichtung vorgesehen sein. Ferner ist es möglich, dass die Signaleinrichtung auf der Basis einer elektrischen Kontaktmessung ausgelöst wird.

Zum Montieren eines Reifens 1 auf die Felge 2 eines Fahrzeugrades in der Reifenmontiereinrichtung werden zunächst Reifen 1 und Felge 2 derart schräg übereinandergelegt, dass der Reifenwulst 6 sich zum Teil innerhalb des Tiefbetts der Felge 2 befindet und zum anderen Teil über das obere Felgenhorn hinausragt. Zur Montage wird die Felge 2 festgehalten. Die Vorrichtung zum Montieren des Reifens 1 hat vorher von z.B. einer vorgeschalteten Typerkennung die Felgenabmessungen und ggf. die Abmessungen der zu montierenden Reifen 1 erhalten. Der Aufziehkopf 3 wird anhand dieser Daten eingestellt und zur Reifenmontage um einen vorbestimmten Weg abgesenkt. Die Montage beginnt in dem Bereich des Reifens 1, in dem der Reifenwulst 6 etwa in Höhe des Felgenhorns. 2a liegt Bei Montagebeginn hat die Stirnfläche 10 des am Aufziehkopf 3 befestigten Wulstabweisers 4 einen geringen Mindestabstand zum zugeordneten Felgenhorn 2a. Der Wulstabweiser 4 bewirkt, dass der Reifenwulst 6 von der Umfangsfläche 12 am Ende des Wulstabweisers 4 auf einer Kreisbahn über das Felgenhom 2a geführt und von der nachgeordneten Eindrückrolle 5 in das Tiefbett der Felge gedrückt wird. Der Montagevorgang eines Reifenwulstes ist mit einer 360° Drehung des Aufziehkopfes 3 beendet.

Wird beim Absenken des Aufziehkopfes 3 bzw. des Wulstabweisers 4 oder beim Drehvorgang der Mindestabstand zwischen den Stirnflächenabschnitten 10a oder 10b des Wulstabweisers 4 zu den benachbarten Bereichen des Felgenhorns 2a unterschritten, wird die am Wulstabweiser 4 angeordnete Signaleinrichtung 20 aktiviert und das Absenken gestoppt bzw. der Drehvorgang angehalten. Es kann nun von dem für das Aufziehen verantwortlichen Werker die Ursache festgestellt und beseitigt werden, bevor Schäden aufgetreten sind. Tritt das Abschalten während des Absenkens auf, können z.B. Fehler bei der Einstellung des Aufziehkopfes 3 oder der Erfassung der Felgenabmessungen vorliegen. Ein Abschalten während des Drehvorganges des Aufziehkopfes kann seine Ursache z.B. in einer fehlerhaften Aufspannung der Felge 2 haben. Durch die Anordnung von zueinander geneigten Stirnflächenabschnitten 10a, 10b kann durch den Flächenabschnitt 10a ein Höhenschlag der Felge 2 und durch den geneigten Flächenabschnitt 10b ein Axial- oder Radialschlag der Felge 2 detektiert werden.

## Patentansprüche

1. Vorrichtung zum Montieren eines Reifens (1) auf eine Felge (2) eines Fahrzeugrades mit einer Einrichtung zum Halten der Felge und einem Aufziehkopf (3) mit Wulstabweiser (4) und Eindrückrolle (5) sowie einem Antrieb zum Drehen des Aufziehkopfes (3) um die Felgenachse und zur axialen Verschiebung des Aufziehkopfes (3) **dadurch gekennzeichnet, dass** am Wulstabweiser (4) eine Einrichtung zur Detektion eines Mindestabstandes zwischen Felge (2) und Aufziehkopf (3) und zur Abgabe eines die Bewegung des Aufziehkopfes (3) beeinflussenden Signals vorgesehen ist, wobei der Wulstabweiser (4) eine dem Felgenhorn (2a) zugeordnete Stirnfläche (10) aufweist, an der ein Dektektionselement angeordnet ist.

2. Vorrichtung nach Anspruch 1, **dadurch gekennzeichnet, dass** die Signalübertragung vom Wulstabweiser (4) zum Antrieb drahtlos erfolgt.

3. Vorrichtung nach Anspruch 1 oder 2, **dadurch gekennzeichnet, dass** das Detektionselement Teil einer Schalteinrichtung (21) ist und einen Schaltstößel (21b) aufweist, der infolge eines Kontakts mit dem Felgenhorn (2a) um einen Schaltweg gegen eine Federkraft verschiebbar ist und dem ein z.B. als Piezoschalter ausgebildeter Schalter zugeordnet ist.

4. Vorrichtung nach Anspruch 3, **dadurch gekennzeichnet, dass** als Energiequelle für die drahtlose Übertragung der Piezoschalter vorgesehen ist.

5. Vorrichtung nach einem der vorhergehenden Ansprüche, **dadurch gekennzeichnet, dass** die Stirnfläche (10) einen ersten Flächenabschnitt (10a) aufweist, der rechtwinklig zur Achse des Wulstabweisers angeordnet ist und einen zweiten Flächenabschnitt (10b), der zum ersten Flächenabschnitt (10a) geneigt und vorzugsweise unter einem Winkel von 45° ansteigend angeordnet ist.

6. Vorrichtung nach Anspruch 5, **dadurch gekennzeichnet, dass** der Schaltstößel (21b) einen in die Stirnfläche (10) eintauchbaren Schaltschuh (21a) aufweist, der der Kontur der Stirnfläche (10) angepasst ist und mittig über die Stirnfläche (10) verläuft.

7. Verfahren zum Montieren eines Reifens (1) auf eine Felge (2) eines Fahrzeugrades mit einem Aufziehkopf (3) mit Wulstabweiser (4) und Eindrückrolle (5), bei dem die Felge (2) drehfest gehalten wird und zum Montieren des Reifens (1) eine vorbestimmte Position zwischen Felge (2) und Aufziehkopf (3) eingestellt wird und zu Beginn und während des Montagevorgangs das Vorliegen eines Mindestabstandes zwischen Felge (2) und Aufziehkopf durch ein in einer Stirnfläche (10) des Wulstabweisers (4) angeordneten Detektionselement detektiert wird und bei Unterschreiten des Mindestabstandes zwischen Felgenhorn (2a) und Wulstabweiser (4) ein die Bewegung des Aufziehkopfes (3) beeinflussenden Signal vom Wulstabweiser (4) an den Antrieb des Montagekopfes (3) übertragen wird.

8. Verfahren nach Anspruch 7, **dadurch gekennzeichnet, dass** die Signalübertragung vom Wulstabweiser (4) zum Antrieb drahtlos erfolgt.

9. Verfahren nach Anspruch 8, **dadurch gekennzeichnet, dass** das Signal von einer ein Piezoelement beaufschlagende Schalteinrichtung (21) nach Kontakt zwischen Felge (2) und Wulstabweiser (4) mit der vom Piezoelement gelieferten Energie abgegeben wird.

## Claims

1. Device for fitting a tyre (1) onto a rim (2) of a vehicle wheel with a means for holding the rim and a fitting head (3) with a bead deflector (4) and pressing roller (5) as well as a drive for rotating the fitting head (3) around the rim axis and for axial displacement of the fitting head (3), **characterised in that** a means for detecting a minimum spacing between the rim (2) and the fitting head (3) and for emitting a signal influencing the movement of the fitting head (3) is provided on the bead deflector (4), wherein the bead deflector (4) has a face (10), which is associated with the wheel flange (2a) and on which a detection element is arranged.

2. Device according to Claim 1, **characterised in that** the signal transmission from the bead deflector (4) to the drive occurs by wireless transmission.

3. Device according to Claim 1 or 2, **characterised in that** the detection element is a part of a switching means (21) and has a switching plunger (21b), which as a result of a contact with the wheel flange (2a) is displaceable by a switching path against a spring force and which has an associated switch configured; for example, as a piezoelectric switch.

4. Device according to Claim 3, **characterised in that** the piezoelectric switch is provided as power source for the wireless transmission.

5. Device according to one of the preceding claims, **characterised in that** the face (10) has a first surface section (10a), which is arranged at right angles to the axis of the bead deflector and a second surface section (10b), which is inclined to the first surface section (10a) and is preferably arranged to slope upwards at an angle of 45°.

6. Device according to Claim 5, **characterised in that** the switching plunger (21 b) has a switching shoe (21a), which can enter into the face (10) and which is adapted to the contour of the face (10) and runs centrally over the face (10).

7. Method for fitting a tyre (1) onto a rim (2) of a vehicle wheel with a fitting head (3) with a bead deflector (4) and pressing roller (5), in which the rim (2) is held fixed against rotation and a predetermined position between the rim (2) and the fitting head (3) is set for fitting the tyre (1), and at the beginning of and during the fitting process the presence of a minimum spacing between the rim (2) and the fitting head is detected by a detection element arranged in a face (10) of the bead deflector (4), and when the minimum spacing between the wheel flange (2a) and the bead deflector (4) is fallen short of, a signal influencing the movement of the fitting head (3) is transmitted from the bead deflector (4) to the drive of the fitting head (3).

8. Method according to Claim 7, **characterised in that** the signal transmission from the bead deflector (4) to the drive occurs by wireless transmission.

9. Method according to Claim 8, **characterised in that** the signal is emitted by a switching means (21) acting on a piezoelectric element after contact between the rim (2) and the bead deflector (4) with the power supplied by the piezoelectric element.

## Revendications

1. Dispositif de montage d'un pneu (1) sur une jante (2) d'une roue de véhicule, comportant un dispositif de blocage de la jante et une tête de montage (3) avec un détalonneur (4) et une roulette d'enfoncement (5), ainsi qu'un système d'entraînement pour la rotation de la tête de montage (3) autour de l'axe de la jante et pour le déplacement axial de la tête de montage (3), **caractérisé en ce qu'**il est prévu sur le détalonneur (4) un dispositif destiné à détecter la distance minimum entre la jante (2) et la tête de montage (3) et à délivrer un signal influant sur le mouvement de la tête de montage (3), le détalonneur (4) comportant une face frontale (10), qui est associée au rebord de jante (2a) et sur laquelle est agencé un élément de détection.

2. Dispositif selon la revendication 1, **caractérisé en ce que** la transmission des signaux est effectuée sans fil depuis le détalonneur (4) vers le système d'entraînement.

3. Dispositif selon la revendication 1 ou 2, **caractérisé en ce que** l'élément de détection fait partie d'un dispositif de commande (21) et comporte un poussoir de commande (21 b) qui, à la suite d'un contact avec le rebord de jante (2a), peut se déplacer sur une distance dans le sens opposé à la force d'un ressort et auquel est associé un commutateur réalisé par exemple sous forme de commutateur piézoélectrique.

4. Dispositif selon la revendication 3, **caractérisé en ce que** le commutateur piézoélectrique est prévu comme source d'énergie pour la transmission sans fil.

5. Dispositif selon l'une quelconque des revendications précédentes, **caractérisé en ce que** la face frontale (10) comporte une première partie (10a), qui est disposée perpendiculairement à l'axe du détalonneur, et une deuxième partie (10b), qui est inclinée par rapport à la première partie (10a) et qui est disposée en pente ascendante en formant un angle de 45°.

6. Dispositif selon la revendication 5, **caractérisé en ce que** le poussoir de commande (21b) comporte une semelle de commande (21a), qui peut pénétrer dans la face frontale (10) et qui est adaptée au contour de la face frontale (10) et s'étend au milieu sur la face frontale (10).

7. Procédé de montage d'un pneu (1) sur une jante (2) d'une roue de véhicule, comportant une tête de montage (3) avec un détalonneur (4) et une roulette d'enfoncement (5), dans lequel procédé la jante (2) est maintenue immobile en rotation, et pour le montage du pneu (1) est réglée une position prédéfinie entre la jante (2) et la tête de montage (3), et la présence d'une distance minimum entre la jante (2) et la tête de montage (3) est détectée au début et pendant le processus de montage au moyen d'un élément de détection agencé dans une face frontale (10) du détalonneur (4), et si la distance entre le rebord de jante (2a) et le détalonneur (4) est inférieure à la distance minimum; un signal influant sur le mouvement de la tête de montage (3) est transmis depuis le détalonneur (4) vers le système d'entraînement de la tête de montage (3).

8. Procédé selon la revendication 7, **caractérisé en ce que** la transmission des signaux est effectuée sans fil depuis le détalonneur (4) vers le système d'entraînement.

9. Procédé selon la revendication 8, **caractérisé en ce que**, après que la jante (2) soit entrée en contact avec le détalonneur (4), le signal est délivré par un dispositif de commande (21), sollicitant un élément piézoélectrique, au moyen de l'énergie fournie par l'élément piézoélectrique.
